(19) Europäisches Patentamt
European Patent Office
Office européen des brevets

(11) Veröffentlichungsnummer : **0 065 934**
**B1**

(12) # EUROPÄISCHE PATENTSCHRIFT

(45) Veröffentlichungstag der Patentschrift : **07.08.85**

(51) Int. Cl.[4] : **C 08 K 5/34**, C 08 L 27/06

(21) Anmeldenummer : **82810218.6**

(22) Anmeldetag : **21.05.82**

(54) **Mit Aminouracilen stabilisierte chlorhaltige Thermoplaste.**

(30) Priorität : **26.05.81 CH 3440/81**

(43) Veröffentlichungstag der Anmeldung : **01.12.82 Patentblatt 82/48**

(45) Bekanntmachung des Hinweises auf die Patenterteilung : **07.08.85 Patentblatt 85/32**

(84) Benannte Vertragsstaaten : **BE DE FR GB IT**

(56) Entgegenhaltungen :
**US-A- 3 436 362**
**Die Akte enthält technische Angaben, die nach dem Eingang der Anmeldung eingereicht wurden und die nicht in dieser Patentschrift enthalten sind.**

(73) Patentinhaber : **CIBA-GEIGY AG**
**Postfach**
**CH-4002 Basel (CH)**

(72) Erfinder : **Wehner, Wolfgang, Dr.**
**Wetzbach 34**
**D-6144 Zwingenberg (DE)**
Erfinder : **Wirth, Hermann O., Dr.**
**Lessingstrasse 24**
**D-6140 Bensheim 3 (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Jouve, 18, rue St-Denis, 75001 Paris, France

**Beschreibung**

Die vorliegende Erfindung betrifft mit Aminouracilen stabilisierte thermoplast ische Formmassen auf der Basis von Vinylchloridpolymeren bzw. die Verwendung von bestimmten Aminouracilen zum Stabilisieren von solchen Formmassen.

Aus der DE-AS-1 694 873 sind Aminouracile, insbesondere 1,3-Dimethyl-6-aminouracil und 1,3-Dimethyl-6-anilinouracil als PVC-Stabilisatoren bekannt.

Für die strengen Anforderungen der Praxis haben sich diese bekannten PVC-Stabilisatoren jedoch als nicht immer zufriedenstellend erwiesen. Ihre Wirksamkeit, bzw. ihre Verträglichkeit mit dem Substrat lässt zu wünschen übrig. Mit 1,3-Dimethyl-6-aminouracil entstehen beispielsweise Formmassen mit starken Trübungen.

Aufgabe der Erfindung war es. Stabilisatoren zu schaffen, die diese Nachteile nicht besitzen.

Demgemäss betrifft die Erfindung thermoplastische Formmassen auf der Grundlage von Vinylchloridpolymeren, enthaltend 0,1 bis 5,0 Gewichtsprozent eines Aminouracils der Formel I

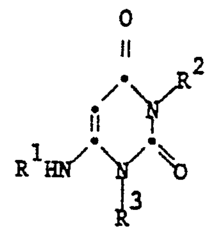

(I)

worin $R^1$ Wasserstoff ist und $R^2$ und $R^3$ $C_2$-$C_4$ Alkyl bedeuten.

$R^2$ und $R^3$ sind als $C_2$-$C_4$ Alkyl beispielsweise Aethyl, n-Propyl, Isopropyl, n-Butyl, sek.-Butyl, tert.-Butyl.

Besonders bevorzugt verwendet man 1,3-Diäthyl-6-aminouracil oder 1,3-Di-n-butyl-6-aminouracil.

Die erfindungsgemäss verwendeten Uracile sind bekannt und können nach bekannten Verfahren hergestellt werden, z. B. wie in der US-PS 2 598 936 angegeben. Sollten einige von ihnen noch neu sein, so können diese in Analogie zu bekannten nach an sich bekannten Verfahren hergestellt werden, z. B. wie in der genannten US-PS angegeben.

Die erfindungsgemäss verwendeten Uracile eignen sich sehr gut zum Schutz gegen den Abbau durch Wärmeeinwirkung von chlorhaltigen Thermoplasten. Sie können einzeln oder untereinander vermischt den zu stabilisierenden Thermoplasten vor der Verarbeitung in üblichen Einrichtungen einverleibt werden, und zwar in jeweiligen Mengen von 0,1 bis 5,0, bevorzugt 0,2 bis 1,5 Gewichtsprozent, bezogen auf die gesamte Zusammensetzung.

Eine noch verbesserte stabilisierende Wirkung erhält man beim zusätzlichen Einsatz in üblichen Mengen mindestens eines der herkömmlichen PVC-Stabilisatoren und/oder Zusätze, wie Epoxyverbindungen, vorzugsweise epoxidierte Fettsäureester, wie epoxidiertes Sojabohnenöl, Phosphite, organische Metallverbindungen von Metallen der zweiten Haupt- und Nebengruppe des Periodensystems, wie z. B. Metallcarboxylate oder Metallphenolate, insbesondere von Carbonsäuren mit 8 bis 20 C-Atomen oder von Phenolen mit 6 bis 20 C-Atomen, wie beispielsweise Ca- oder Zn-Stearat, oder auch anorganische Salze von Metallen der zweiten Nebengruppe des Periodensystems, wie z. B. $ZnCl_2$ oder ferner auch Organozinnverbindungen, insbesondere Mischungen aus Mono- und Diorganozinnverbindungen, wie Mono-n-octyl-tris isooctyl-thioglycolat und Di-n-octyl-bis-isooctyl-thioglycolat, oder Organoantimonverbindungen wie Antimon-tris-isooctyl-thioglycolat (isooctyl = 1,1,3,3-Tetramethylbutyl).

Costabilisatoren werden bevorzugt in Mengen von 0,05 bis 6, besonders 0,1 bis 3 Gew.-% bezogen auf die gesamte Zusammensetzung eingearbeitet. Das Verhältnis von Aminouracil zu Costabilisatoren kann hierbei etwa 2 : 1 bis 1 : 8 betragen.

Besonders geeignete herkömmliche Phosphite sind Phosphite der allgemeinen Formeln, II, III oder IV

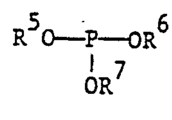

(II)

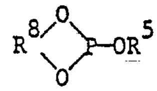

(III)

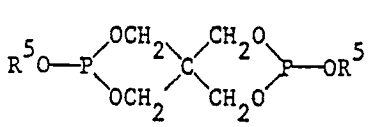

(IV)

worin $R^5$, $R^6$ und $R^7$ unabhängig voneinander $C_1$-$C_{18}$ Alkyl, $C_1$-$C_{20}$ Alkenyl, $C_6$-$C_{12}$ Aryl, gegebenenfalls

durch Hydroxy oder $C_1$-$C_4$ Alkoxy substituiertes $C_7$-$C_{19}$ Alkaryl oder $C_5$-$C_7$ Cycloalkyl bedeuten und $R^8$ gegebenenfalls durch $C_1$-$C_{18}$ Alkyl, $C_2$-$C_{13}$ Alkoxymethyl oder Alkylthiomethyl oder durch Phenyl substituiertes $C_2$-$C_6$ Alkylen, gegebenenfalls durch $C_1$-$C_4$ Alkyl substituiertes $C_6$-$C_{10}$ Arylen oder $C_5$-$C_7$ Cycloalkylen bedeutet.

Bedeuten $R^5$, $R^6$ und $R^7$ $C_1$-$C_{18}$ Alkyl, so handelt es sich z. B. um Methyl, Aethyl, n-Propyl, Isopropyl, n-Butyl, sec.-Butyl, tert.-Butyl, n-Pentyl, n-Hexyl, n-Octyl, n-Nonyl, Decyl, Dodecyl, Tetradecyl, Hexadecyl oder Octadecyl. Bevorzugt sind Alkylgruppen mit 8 bis 18 C-Atomen.

Bedeuten $R^5$, $R^6$ und $R^7$ $C_1$-$C_{20}$ Alkenyl, so handelt es sich beispielsweise um Allyl, 2-Butenyl, Pentenyl, Hexenyl, Heptenyl oder Oleyl.

$R^5$, $R^6$ und $R^7$ können als Aryl z. B. Naphthyl, Biphenyl oder bevorzugt Phenyl sein.

Als gegebenenfalls mit Hydroxy oder $C_1$-$C_4$ Alkoxy substituiertes $C_7$-$C_{19}$ Alkaryl bedeuten $R^5$, $R^6$ und $R^7$ beispielsweise Tolyl, Aethylphenyl, Xylyl, Cumyl, Cymyl, Kresyl, 4-Methoxyphenyl, 2,4-Dimethoxyphenyl, Alkoxyphenyl oder Butoxyphenyl.

Als $C_5$-$C_7$ Cycloalkyl sind $R^5$, $R^6$ und $R^7$ beispielsweise Cyclopentyl, Cycloheptyl und insbesondere Cyclohexyl.

Als gegebenenfalls $C_1$-$C_{18}$ Alkyl oder Phenyl substituiertes $C_2$-$C_6$ Alkylen kann $R^8$ z. B. durch Methyl, Aethyl, Propyl, Isopropyl, Butyl, Hexyl, Decyl, Docecyl, Tetradecyl, Octadecyl oder Phenyl substituiertes Aethylen, Propylen oder Hexamethylen und insbesondere 2-Propyl-2-methyl-propylen, 1-Propyl-2-äthyl-propylen, Phenyläthylen oder auch unsubstituiertes Aethylen sein.

$R^8$ kann als durch $C_2$-$C_{13}$ Alkoxymethyl oder Alkylthiomethyl substituiertes $C_2$-$C_6$ Alkylen, z. B. Aethoxymethyl-, Butoxymethyl-, Octyloxymethyl- oder Dodecylthiomethyläthylen sein.

$R^8$ ist als gegebenenfalls durch $C_1$-$C_4$ Alkyl substituiertes $C_6$-$C_{10}$ Arylen z. B. tert.-Butylphenylen oder unsubstituiertes Phenylen.

$R^8$ ist als $C_5$-$C_7$ Cycloalkylen insbesondere Cyclohexylen.

Von den Phosphiten der Formel IV sind diejenigen bevorzugt, worin $R^5$ $C_1$-$C_{18}$ und insbesondere $C_8$-$C_{18}$ Alkyl und vor allem Octyl oder Decyl bedeutet.

Ganz besonders geeignete Phosphite sind Trioctyl-, Tridecyl-, Tridodecyl-, Tritetradecyl-, Tristearyl-, Trioleyl-, Triphenyl-, Trikresyl-, Tris-p-nonylphenyl- oder Tricyclohexylphosphit und besonders bevorzugt sind die Aryl-Dialkyl- sowie die Alkyl-Diaryl-Phosphite wie z. B. Phenyldidecyl-, Nonylphenyl-didecyl-, (2,4-Di-tert.-butylphenyl)-di-dodecylphosphit, (2,6-Di-tert.-butylphenyl)-di-dodecylphosphit.

Eine besonders gute Stabilisierung erhält man, wenn zu den Aminouracilen der Formel I mindestens eine Epoxyverbindung und/oder ein Metallcarboxylat oder -phenolat eines Metalls der zweiten Hauptgruppe des Periodensystems, vorzugsweise ein Calziumcarboxylat und insbesondere Calziumstearat, zugesetzt wird. Noch besser wird die stabilisierende Wirkung, wenn man zusätzlich noch mindestens eines der oben definierten Phosphite oder mindestens ein Zink- oder Cadmiumcarboxylat, eine Organozinnverbindung oder eine Organoantimonverbindung einsetzt. Von den Organozinnverbindungen sind Mischungen von Mono- und Diorganozinnverbindungen bevorzugt.

Eine ganz besonders gute Stabilisierung erhält man jedoch, wenn die chlorhaltigen Thermoplasten mit einem Gemisch aus mindestens einem Aminouracil der Formel I, mindestens einer Epoxyverbindung und/oder einem Metallcarboxylat oder -phenolat eines Metalls der zweiten Hauptgruppe des Periodensystems, mindestens einem Zink- oder Cadmiumcarboxylat oder einer Organozinnverbindung und mindestens einem der oben definierten Phosphite stabilisiert werden.

Unter diesen Bedingungen gewährleistet überraschenderweise schon eine relativ geringe Konzentration eines Aminouracils der Formel I eine hervorragende Stabilisierung.

Für die erfindungsgemässen Formmassen werden Vinylchloridpolymere oder -copolymere verwendet. Bevorzugt sind Suspensions- und Massepolymere und ausgewaschene, also emulgatorarme Emulsionspolymere. Als Comonomere für die Copolymerisate kommen z. B. in Frage : Vinylacetat, Vinylidenchlorid, Transdichloräthen, Aethylen, Propylen, Butylen, Maleinsäure, Acrylsäure, Fumarsäure, Itaconsäure. Weitere geeignete chlorhaltige Polymere sind nachchloriertes PVC und chlorierte Polyolefine, ferner pfropfpolymerisate von PVC mit EVA und MBS.

Die Herstellung der erfindungsgemäss stabilisierten Thermoplaste erfolgt nach bekannten Verfahren durch Einarbeiten der Stabilisatoren und gegebenenfalls weiterer Stabilisatoren in das Polymerisat. Eine homogene Mischung von Stabilisator und PVC kann z. B. mit Hilfe eines Zweiwalzenmischers bei 150 bis 210 °C erzielt werden. Je nach dem Verwendungszweck der Formmasse können vor oder mit der Einarbeitung des Stabilisators auch weitere Zusätze eingearbeitet werden, wie z. B. Gleitmittel (bevorzugt Montanwachse oder Glycerinester), Fettsäureester, Paraffine, Weichmacher, Füllstoffe, Russ, Asbest, Kaolin, Talk, Glasfasern, Modifikatoren (wie etwa Schlagzäh-Zusätze), optische Aufheller, Pigmente, Lichtstabilisatoren, UV-Absorber, Flammschutzmittel, Antistatika oder weitere Costabilisatoren wie z. B. Antioxidantien, insbesondere phenolische Antioxidantien. Die erfindungsgemässen Thermoplaste können nach den dafür gebräuchlichen Formgebungsverfahren z. B. durch Extrusion, Spritzgiessen oder Kalandrieren zu Formteilen verarbeitet werden. Auch die Verwendung als Plastisole ist möglich.

Die Thermostabilisierung mit den erfindungsgemäss verwendeten Stabilisatoren ist in den erfindungsgemäss stabilisierten Thermoplasten hervorragend. Auch die Lichtstabilität ist gut.

Die nachfolgenden Beispiele dienen der näheren Erläuterung der Erfindung. Dabei sind, wenn nicht anders definiert, Teile Gewichtsteile.

Beispiel 1

Eine Trockenmischung bestehend aus den in den nachfolgenden Rezepturen angegebenen Ingredienzen wird auf einem Mischwalzwerk 5 Minuten bei 180 °C gewalzt. Vom gebildeten Walzfell werden Testfolienstücke von 0,3 mm Dicke entnommen. Die Folienproben werden in einem Ofen bei 180 °C thermisch belastet und im zeitlichen Abstand von 10 Minuten an einer Probe der Yellowness Index (YI) nach ASTM D 1925-70 bestimmt. Die Ergebnisse sind in den nachstehenden Tabellen zusammengefasst.

| | |
|---|---|
| 1) S-PVC (K-Wert 64) | 100 Teile |
| Epoxidiertes Sojaöl | 2 Teile |

Statischer Hitzetest (180 °C)

| Belastungszeit (Min) | 0 | 10 | 20 |
|---|---|---|---|
| Yellowness Index | 28,0 | 80,0 | >100 |

| | |
|---|---|
| 1a) S-PVC (K-Wert 64) | 100 Teile |
| Epoxidiertes Sojaöl | 2 Teile |
| 1,3-Diäthyl-6-aminouracil | 0,6 Teile |

Statischer Hitzetest (180 °C)

| Belastungszeit (Min) | 0 | 10 | 20 | 30 | 40 | 50 |
|---|---|---|---|---|---|---|
| Yellowness Index | 3,8 | 6,7 | 9,5 | 17,9 | 29 | 52,9 |

| | |
|---|---|
| 1b) S-PVC (K-Wert 64) | 100 Teile |
| Epoxidiertes Sojaöl | 2 Teile |
| 1,3-Di-n-butyl-6-aminouracil | 0,6 Teile |

Statischer Hitzetest (180 °C)

| Belastungszeit (Min) | 0 | 10 | 20 | 30 | 40 |
|---|---|---|---|---|---|
| Yellowness Index | 2,5 | 6,3 | 14,7 | 24,6 | 52,7 |

| | |
|---|---|
| 1c) S-PVC (K-Wert 64) | 100 Teile |
| Epoxidiertes Sojaöl | 3 Teile |
| Zinkstearat | 0,15 Teile |
| Calziumstearat | 0,35 Teile |
| Tridecylphosphit | 0,55 Teile |

Statischer Hitzetest (180 °C)

| Belastungszeit (Min) | 0 | 10 | 20 | 30 | 40 |
|---|---|---|---|---|---|
| Yellowness Index | 25,2 | 33,7 | 33,7 | 69,8 | >100 |

| | |
|---|---|
| 1d) S-PVC (K-Wert 64) | 100 Teile |
| Epoxidiertes Sojaöl | 3 Teile |
| 1,3-Di-äthyl-6-aminouracil | 0,46 Teile |
| Zinkstearat | 0,15 Teile |
| Calziumstearat | 0,35 Teile |
| Tridecylphosphit | 0,55 Teile |

Statischer Hitzetest (180 °C)

| Belastungszeit (Min) | 0 | 10 | 20 | 30 | 40 |
|---|---|---|---|---|---|
| Yellowness Index | 2,3 | 6,0 | 9,5 | 14,7 | 29,4 |

1e) S-PVC (K-Wert 64) 100 Teile
Epoxidiertes Sojaöl 3 Teile
1,3-Di-n-butyl-6-aminouracil 0,6 Teile
Zinkstearat 0,15 Teile
Calziumstearat 0,35 Teile
Tridecylphosphit 0,55 Teile

Statischer Hitzetest (180 °C)

| Belastungszeit (Min) | 0 | 10 | 20 | 30 | 40 |
|---|---|---|---|---|---|
| Yellowness Index | 2,4 | 4,7 | 7,6 | 14,9 | 44,0 |

Beispiel 2

Eine Trockenmischung bestehend aus 100 Teilen S-PVC (K-Wert 64), 2 Teilen epoxidierten Sojaöls und je 0,6 Teilen eines der in nachstehender Tabelle aufgeführten Aminouracile wird auf einem Mischwalzwerk 5 Minuten bei 180 °C gewalzt. Die so gebildeten Walzfelle werden bei 180 °C, 1 Minute zu Pressplatten von 1 mm Dicke verarbeitet und letztere visuell auf deren Trübung beurteilt. Die Resultate sind in der nachstehenden Tabelle aufgezeichnet.

| | |
|---|---|
| 1,3-Diäthyl-6-aminouracil | keine Trübung |
| 1,3-Di-n-butyl-6-amino-uracil | keine Trübung |

Beispiel 3

Eine Trockenmischung bestehend aus 100 Teilen S-PVC (K-Wert 64), 2 Teilen epoxidierten Sojaöls und 0,46 Teilen 1,3-Diäthyl-6-aminouracil wird auf einem Mischwalzwerk 5 Minuten vei 180 °C gewalzt. Die so gebildeten Walzfelle werden bei 180 °C 1 Minute zu Pressplatten von 1 mm Dicke verarbeitet. Die Messung des Yellowness Index nach ASTM D 1925-70 ergibt einen Wert von 16,5.

Beispiel 4

Eine Trockenmischung bestehend aus 100 Teilen S-PVC (K-Wert 64), 2 Teilen epoxidierten Sojaöls und 0,6 Teilen 1,3-Di-n-butyl-6-aminouracil wird wie in Beispiel 3 beschrieben zu Pressplatten von 1 mm Dicke verarbeitet. Die Messung des Yellowness Index nach ASTM D 1925-70 ergibt einen Wert von 15,9.

Beispiel 5

Eine Trockenmischung bestehend aus 100 Teilen S-PVC (K-Wert 64), 3 Teilen epoxidierten Sojaöls, 0,46 Teilen 1,3-Diäthyl-6-aminouracil, 0,15 Teilen Zinkstearat, 0,35 Teilen Calzium-stearat und 0,55 Teilen Tridecylphosphit wird wie in Beispiel 3 beschrieben zu Pressplatten von 1 mm Dicke verarbeitet. Die Messung des Yellowness Index nach ASTM D 1925-70 ergibt einen Wert von 13,9.

Beispiel 6

Eine Trockenmischung bestehend aus 100 Teilen S-PVC (K-Wert 64), 3 Teilen epoxidierten Sojaöls, 0,6 Teilen 1,3-Di-n-butyl-6-aminouracil, 0,15 Teilen Zinkstearat, 0,35 Teilen Calzium-stearat und 0,55 Teilen Tridecylphosphit wird wie in Beispiel 3 beschrieben zu Pressplatten von 1 mm Dicke verarbeitet. Die Messung des Yellowness Index nach ASTM D 1925-70 ergibt einen Wert von 14,1.

Mit einer Trockenmischung wie sie in den Beispielen 5 und 6 beschrieben ist, jedoch ohne Aminouracil, erhält man eine Pressplatte mit einem Yellowness Index von 64,9 (nach ASTM D 1925-70).

**Patentansprüche**

1. Thermoplastische Formmassen auf der Grundlage von Vinylchloridpolymeren, enthaltend 0,1 bis 5,0 Gewichtsprozent eines Aminouracils der Formel

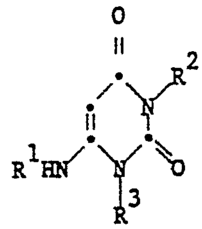

(I)

worin $R^1$ Wasserstoff ist und $R^2$ und $R^3$ $C_2$-$C_4$ Alkyl bedeuten.

2. Formmassen nach Anspruch 1, worin das Aminouracil 1,3-Di-n-butyl-6-aminouracil ist.

3. Formmassen nach Anspruch 1, worin das Aminouracil 1,3-Diäthyl-6-aminouracil ist.

4. Formmassen nach einem der Ansprüche 1 bis 3, enthaltend zusätzlich einen oder mehrere herkömmliche PVC-Stabilisatoren und/oder Zusätze ausgewählt aus der Gruppe bestehend aus Epoxyverbindungen, Phosphite, organische Metallverbindungen von Metallen der zweiten Haupt- und Nebengruppe des Periodensystems, anorganische Salze von Metallen der zweiten Nebengruppe des Periodensystems und Organozinnverbindungen oder Organoantimonverbindungen.

5. Formmassengemäss Anspruch 4 enthaltend als herkömmlichen Zusatz mindestens eine Epoxyverbindung und/oder ein Metallcarboxylat oder -phenolat eines Metalls der zweiten Hauptgruppe des Periodensystems.

6. Formmassen gemäss Anspruch 4 enthaltend als herkömmlichen Zusatz mindestens ein Phosphit.

7. Formmassen gemäss Anspruch 5 enthaltend zusätzlich mindestens ein Phosphit.

8. Formmassen gemäss Anspruch 5 enthaltend zusätzlich mindestens ein Zink- oder Cadmiumcarboxylat oder eine Organozinnverbindung.

9. Formmassen gemäss Anspruch 8 enthaltend zusätzlich mindestens ein Phosphit.

10. Verwendung von Aminouracilen gemäss Anspruch 1 zum Stabilisieren von Vinylchloridpolymeren.

**Claims**

1. A thermoplastic moulding composition based on a vinyl chloride polymer, which composition contains 0.1 to 5 % by weight of an aminouracil of the formula

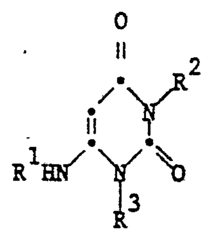

(I)

wherein $R^1$ is hydrogen and $R^2$ and $R^3$ are $C_2$-$C_4$ alkyl.

2. A moulding composition according to claim 1, wherein the aminouracil is 1,3-di-n-butyl-6-aminouracil.

3. A moulding composition according to claim 1, wherein the aminouracil is 1,3-diethyl-6-aminouracil.

4. A moulding composition according to any one of claims 1 to 3, which additionally contains one or more conventional PVC stabilisers and/or additives selected from the group consisting of epoxy compounds, phosphites, organometal compounds of metals of the second main and auxiliary group of the Periodic Table, inorganic salts of metals of the second auxiliary group of the Periodic Table, and organotin compounds or organoantimony compounds.

5. A moulding composition according to claim 4, which contains, as conventional additional ingredient, at least one epoxy compound and/or a metal carboxylate or metal phenolate of a metal of the second main group of the Periodic Table.

6. A moulding composition according to claim 4, which contains, as conventional additional ingredient, at least one phosphite.

7. A moulding composition according to claim 5, which additionally contains at least one phosphite.

8. A moulding composition according to claim 5, which additionally contains at least one zinc or cadmium carboxylate or organotin compound.

9. A moulding composition according to claim 8, which additionally contains at least one phosphite.

10. A method of stabilising vinyl chloride polymers, which comprises incorporating therein an aminouracil according to claim 1.

## Revendications

1. Matières à mouler thermoplastiques à base de polymères du chlorure de vinyle, matières qui contiennent de 0,1 à 5,0 % en poids d'un amino-uracile répondant à la formule I

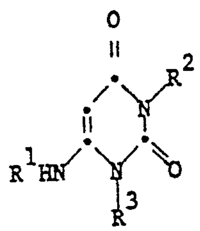

(I)

dans laquelle $R^1$ représente l'hydrogène tandis que $R^2$ et $R^3$ représentent chacun un radical alkyle contenant de 2 à 4 atomes de carbone.

2. Matières à mouler selon la revendication 1 dans lesquelles l'amino-uracile est le di-n-butyl-1,3 amino-6 uracile.

3. Matières à mouler selon la revendication 1 dans lesquelles l'amino-uracile est le diéthyl-1,3 amino-uracile.

4. Matières à mouler selon l'une quelconque des revendications 1 à 3, qui contiennent, en plus, un ou plusieurs stabilisants usuels du PVC et/ou des additifs choisis dans l'ensemble constitué par les composés époxydiques, les phosphites, les composés organiques de métaux du deuxième groupe (principal ou secondaire) de la classification périodique, les sels minéraux de métaux du deuxième sous-groupe de la classification périodique et les composés organostanniques ou organo-antimoniques.

5. Matières à mouler selon la revendication 4 qui contiennent, comme additif usuel, au moins un composé époxydique et/ou un carboxylate ou phénolate d'un métal du deuxième groupe principal de la classification périodique.

6. Matières à mouler selon la revendication 4 qui contiennent, comme additif usuel, au moins un phosphite.

7. Matières à mouler selon la revendication 5 qui contiennent, en plus, au moins un phosphite.

8. Matières à mouler selon la revendication 5 qui contiennent, en plus, au moins un carboxylate de zinc ou de cadmium ou un composé organostannique.

9. Matières à mouler selon la revendication 8 qui contiennent, en plus, au moins un phosphite.

10. Application d'amino-uraciles selon la revendication 1 pour la stabilisation de polymères du chlorure de vinyle.